# FASCICULE DE BREVET EUROPEEN

(11) **EP 1 436 230 B1**
(45) Date de publication et mention de la délivrance du brevet: **04.03.2015**
(21) Numéro de dépôt: 02785552.7
(22) Date de dépôt: 17.10.2002
(51) Int. Cl.: C01F 7/02, C01F 7/44, C04B 35/632, C04B 35/63, C04B 35/634, C09C 1/40

(54) **ALUMINE CALCINEE BROYEE DESTINEE A ENTRER DANS LA COMPOSITION D'UN PRECURSEUR POUR MATERIAU REFRACTAIRE, ET PROCEDE D'OBTENTION DE LADITE ALUMINE**
KALZINIERTES VERMAHLTES ALUMINIUMOXID ZUR VERWENDUNG IN VORPRODUKTZUSAMMENSETZUNG FÜR FEUERFESTWERKSTOFFE, UND VERFAHREN ZUR HERSTELLUNG DIESES ALUMINIUMOXIDS
GROUND CALCINED ALUMINA FOR INPUT IN A PRECURSOR COMPOSITION FOR REFRACTORY MATERIAL, AND METHOD FOR OBTAINING SAME

(30) Priorité: 18.10.2001 FR 0113450
(43) Date de publication de la demande: 14.07.2004
(73) Titulaire: ALTEO GARDANNE, 13120 Gardanne (FR)
(72) Inventeur: MARTIN, Nicolas, Les Jardins de Méjanes Bâtiment C, F-13090 Aix en Provence (FR); BARTHELEMY, Christian, F-38500 Voiron (FR)
(74) Mandataire: Sarlin, Laure V.
(86) Numéro de dépôt international: PCT/FR2002/003550
(87) Numéro de publication internationale: WO 2003/033405

(56) Documents cités:
- EP-A- 1 220 042
- DE-A- 19 828 257
- FR-A- 2 807 749
- US-A- 5 252 655
- US-A- 5 541 249
- US-A- 5 543 173
- US-A- 5 916 536

## Description

### DOMAINE TECHNIQUE

L'invention concerne une alumine calcinée broyée destinée à entrer dans la composition d'un précurseur pour matériau réfractaire ainsi qu'un procédé permettant d'obtenir ladite alumine calcinée broyée. Plus particulièrement, elle concerne les alumines destinées à l'élaboration de matériaux réfractaires qui ne nécessitent pas une aptitude particulière au frittage et notamment sont utilisées pour l'élaboration de bétons réfractaires.

### ETAT DE LA TECHNIQUE

Les alumines calcinées sont constituées principalement d'agglomérats plus ou moins friables de particules élémentaires d'alumine alpha, appelées cristallites. Elles se distinguent par la diversité de leurs applications résultant de la grande variété de leurs propriétés liées notamment à leur pureté, à la taille et à la morphologie des cristallites et à leur taux de transformation en alumine alpha ou taux d'alphanisation - lui-même fonction du degré de calcination de l'alumine.

Les alumines se présentent après calcination sous forme d'agglomérats de cristallites ayant un diamètre moyen compris entre 50 et 100 µ. Afin d'obtenir les caractéristiques recherchées dans certains marchés (essentiellement céramiques et réfractaires), les alumines calcinées sont en général broyées. On obtient après broyage une alumine présentant la distribution granulométrique souhaitée. En fonction de l'intensité du broyage, les agglomérats sont cassés, libérant des agglomérats de plus petite taille, voire des cristallites isolés.

La calcination de telles alumines s'effectue en général en présence d'un minéralisant qui d'une part permet d'avoir une température d'alphanisation plus basse et d'autre part influe sur la taille et la forme des cristallites obtenus. Ainsi, l'emploi de fluor, typiquement en proportion comprise entre 0,001 % et 0,2 % en volume dans l'atmosphère du four de calcination, permet d'avoir une température d'alphanisation comprise entre 900 °C et 1300 °C, de préférence entre 1000 et 1200°C. Avec un tel minéralisant, il est difficile d'obtenir industriellement des particules dont la taille des cristallite est supérieure à 4 µ ou encore, par corrélation, des particules présentant une surface BET (selon norme NF 12-621) inférieure à 0,4 m2/g. Le brevet US 5 916 536 décrit un procédé de fabrication d'alumine calcinée dans lequel l'hydrate d'alumine est calciné en présence d'un minéralisant halogéné et d'un modificateur de cristallisation à base de silice, ce qui permet d'obtenir une alumine à granulométrie étroite et monodispersée.

L'alumine calcinée broyée recherchée par les réfractoristes doit posséder un certain nombre de propriétés d'emploi, liées d'une part à leur aptitude à couler en barbotine (coulabilité) et d'autre part à leur aptitude à retenir le moins d'eau possible (prise d'eau), de façon à ce que la porosité des produits réfractaires obtenus soit faible et n'entraîne pas une dégradation inacceptable de leurs caractéristiques mécaniques.

La prise d'eau, exprimée ici en ml d'eau pour 100g d'alumine, doit être aussi faible que possible: plus la poudre peut absorber d'eau, plus il y a création de porosité sur le produit réfractaire, moins ses caractéristiques mécaniques seront bonnes. On la mesure en ajoutant une certaine quantité d'eau sur une masse donnée de poudre d'alumine jusqu'à ce qu'on obtienne une masse unique et cohésive. De manière générale, la prise d'eau diminue lorsque un broyage est poussé: il y a amélioration des propriétés d'emploi.

La coulabilité en barbotine est mesurée en observant le temps de coulée dans un moule. Celui-ci doit être très court et il faut éviter la sédimentation du mélange. On remplit un conteneur de volume donné possédant un orifice dont l'ouverture est fixée. On retourne ce conteneur et on mesure le temps nécessaire pour « vider » celui-ci. Le débit d'évacuation mesuré doit être aussi élevé que possible. En général, la coulabilité en barbotine est quantifiée par le temps mis par une quantité donnée de barbotine pour s'écouler hors dudit conteneur, ladite barbotine étant elle-même issue d'un mélange de constituants apportés avec des proportions données. Le temps d'écoulement de la barbotine diminue lorsque le broyage est poussé.

On constate que dans les procédés actuels qui permettent d'obtenir des alumines calcinées broyées présentant des valeurs de prise d'eau et de coulabilité satisfaisantes, il est nécessaire soit de calciner l'alumine à une température élevée, supérieure à 1300 °C, soit de changer la nature et/ou les proportions du minéralisant. Quelle que soit la solution choisie, il s'en suit une augmentation importante du coût de fabrication de telles alumines pour applications réfractaires en raison de la modification et/ou de la maintenance accrue des fours de calcination.

Le brevet US 5 543 173 divulgue un traitement de surface de particules d'hydrate d'alumine (il ne s'agit donc pas d'alumine calcinée) avec un silane utilisé comme agent anti-mottant, qui diminue le risque d'agglomération de la poudre en environnement humide.

### PROBLEME POSE

La demanderesse a cherché à mettre au point un procédé permettant d'obtenir dans des conditions industrielles économiquement satisfaisantes une alumine calcinée broyée permettant d'avoir une coulabilité et une prise d'eau acceptables, répondant aux critères d'emploi définis par les réfractoristes.

### OBJET DE L'INVENTION

Un premier objet selon l'invention est un procédé d'obtention d'une alumine calcinée broyée destinée à entrer dans la composition d'un précurseur pour matériau réfractaire dans lequel on calcine un hydrate d'alumine à une température comprise entre 800°C et 1300°C pendant une durée de 1/2 heure à 4 heures, de préférence en présence d'un composé halogéné faisant office de minéralisant, caractérisé en ce que l'alumine calcinée obtenue est broyée en présence d'un oxyranyl-alkyl-silane, de formule chimique C₉H₂₀O₅Si.

Le composé halogéné faisant office de minéralisant est de préférence un composé fluoré choisi dans le groupe fluor, acide fluorhydrique, trifluorure d'aluminium, fluorures alcalins. Sous forme gazeuse, il peut être introduit et mélangé dans l'atmosphère du four. Il peut également, être dispersé dans la charge de trihydrate d'alumine sous forme gazeuse, sous forme de solution aqueuse ou sous forme solide. L'apport en minéralisant est tel que l'alumine en sortie de four contient 20 à 80 g de fluor par tonne d'Al2O3. L'introduction du minéralisant génère une atmosphère faiblement fluorée dans le four, la proportion en volume de gaz halogéné étant comprise entre 0,001% et 0,2%.

La demanderesse a en effet constaté que ledit oxyranyl-alkyl-silane organofonctionnel, dont l'emploi avait été initialement envisagé comme additif anti-mottant de broyage, a donné, de façon étonnante, des propriétés d'emploi améliorées à l'alumine calcinée obtenue avec les conditions courantes d'obtention. Cet additif est mélangé dans des proportions très faibles à l'alumine calcinée (0,01 % à 1 % pondéral de la masse d'alumine calcinée) ce qui a l'avantage de ne pas - ou peu - modifier les propriétés chimiques de l'alumine ainsi réalisée. De préférence, on choisit une proportion de silane organofonctionnel comprise entre 0,01% et 0,1%.

La solution proposée par la présente invention consiste donc à ne pas modifier les conditions de calcination, ce qui se révèle toujours coûteux et risqué (risque de modification des propriétés chimiques de l'alumine employée), mais à modifier les conditions de broyage en utilisant un additif en très faible quantité.

L'alumine calcinée broyée obtenue par le procédé précédemment décrit est également décrite. C'est une alumine calcinée broyée additivée utilisée comme composant d'un précurseur de matériau réfractaire caractérisée en ce qu'elle comporte un oxyranyl-alkyl-silane, de formule chimique C₉H₂₀O₅Si.

L'alumine calcinée broyée se présente sous la forme de particules recouvertes d'une couche nanométrique dudit silane organofonctionnel. Ledit silane organofonctionnel se trouve dans l'alumine additivée dans la proportion de 0,01 % à 1 % pondéral, de préférence dans la proportion de 0,01 % à 0,1 % pondéral.

Pour déterminer la proportion de silane organofonctionnel comprise dans l'alumine additivée, une procédure d'analyse a été mise au point: on effectue une analyse par chromatographie en phase gazeuse et on détermine le spectre de masse pour chaque pic d'extraction du chromatogramme (voir l'exemple 4).

La taille des cristallites correspond à ce qui est habituellement obtenu avec un minéralisant fluoré et une température de calcination comprise entre 1100°C et 1250°C. Elle se traduit par un D50 inférieur à 4 µ.

L'alumine calcinée broyée ainsi additivée présente des valeurs de prise d'eau et de temps d'écoulement de la barbotine significativement inférieures à celles qui seraient mesurées sans l'additif. Ces valeurs sont toutefois relatives, elle dépendent notamment des conditions de broyage: broyage en batch ou broyage continu, durée du broyage. L'exemple 1 expose des valeurs obtenues après broyage en batch dans des broyeurs de 60 litres. Quelle que soit la durée du broyage (obtention d'une alumine avec diamètre moyen des particules de 6µ, 5µ ou 4µ), on constate que le temps d'écoulement de la barbotine est toujours inférieur à 25 s, alors qu'il est supérieur à 28 s avec une alumine sans additif.

L'exemple 2 expose des valeurs - plus élevées - obtenues après broyage en continu. Dans des conditions de broyage en continu, on constate que, quelle que soit la durée du broyage, le temps d'écoulement de la barbotine est voisin de 35 s, alors qu'il est de l'ordre de 70 s avec une alumine sans additif. Ainsi, que le broyage soit effectué en batch ou en continu, on constate une amélioration due à l'additif se traduisant par une division par au moins 2 du temps d'écoulement de la barbotine caractérisant la coulabilité du produit.

Un autre objet selon l'invention est une alumine calcinée broyée additivée utilisée comme composant d'un précurseur de matériau réfractaire caractérisée en ce qu'elle comporte un silane organofonctionnel, la fonction organique étant typiquement une fonction époxy, une fonction alkyl, une fonction alcool ou une fonction diol. De préférence ledit silane organofonctionnel est un oxyranyl-alkyl-silane, de formule chimique C₉H₂₀O₅Si.

Cette alumine additivée peut être obtenue en ajoutant ledit silane organofonctionnel au cours du broyage pour bénéficier de ses propriétés anti-mottantes et le mélange intime et homogène est obtenu grâce au broyage.

Mais elle peut également résulter d'un mélange après broyage. Dans ce cas, l'introduction du silane organofonctionnel dans l'alumine doit être effectuée de telle sorte que l'on obtienne un mélange aussi homogène que possible. On peut utiliser un mélangeur batch ou continu après avoir introduit le silane organofonctionnel dans l'alumine calcinée broyée, par pulvérisation à l'aide d'un atomiseur ou d'une pompe volumétrique.

### MODES DE REALISATION DE L'INVENTION

### EXEMPLE 1: Broyage en batch d'alumines calcinées

### 1.1 Broyage en batch d'une alumine en présence ou non de différent additifs

Il s'agit d'une alumine calcinée à partir d'hydrargillite Bayer et référencée AC34 par ALUMINUM PECHINEY (99,6 % d'alumine, 2500 ppm de soude, 100 ppm de silice, 160 ppm de chaux, 120 ppm de sesquioxyde de fer). La taille moyenne des cristallites est de 2,7 µ. Le D50 des particules avant broyage est voisin de 70 µ.

Les additifs employés sont les suivants: glycérol, amines, polyméthacrylate, silice pyrogénée et silane. Le silane choisi est un oxyranyl-alkyl-silane C₉H₂₀O₅Si.

On verse 9 kg d'alumine AC34 dans un broyeur batch de 60 litres. On fait tourner le broyeur batch autour de son axe de rotation à raison de 40 tours/minute. On remplit le broyeur batch en rotation avec des billes de broyage de diamètre 19 mm. La masse totale des billes introduites dans le broyeur est de 45 kg. On introduit ensuite l'additif testé. La durée du broyage est déterminée de façon à obtenir un diamètre moyen de particules égale à 4 µ jalumine calcinée broyée référencée AC34B4 par ALUMINIUM PECHINEY). En l'occurrence, la durée du broyage est ici voisine de 4 heures.

La tableau suivant donne les résultats des mesures effectuées sur l'alumine calcinée ainsi broyée. Ces mesures concernent les propriétés recherchées par les réfractoristes: la prise d'eau et le temps nécessaire pour qu'une barbotine occupant un volume de 150 centimètres cubes s'écoule hors d'un conteneur cylindrique (diamètre 40 mm). La barbotine est un mélange de 250 g d'alumine et de 60,5 g de solution aqueuse à 10 g/l de défloquant. Le conteneur cylindrique a un fond percé d'un orifice central de 6 mm de diamètre par lequel la barbotine doit s'écouler.

| | sans additif | +0.05% amine | +0.05% glycerol | +0.05% polymétacrylate | +0.05% silice pyrogénée | +0.05% silane |
|---|---|---|---|---|---|---|
| PRISE D'EAU (ml/100g) | **20** | **18** | **18** | **18** | **19** | **15** |
| COULABILITE en barbotine temps d'écoulement (s) | **28** | **37 - 48** | **29** | **20** | **26** | **10** |

Le silane se distingue des autres additifs par l'amélioration nette des propriétés d'emploi recommandées pour l'élaboration de matériaux réfractaires: par rapport à la même alumine calcinée broyée sans additif, la prise d'eau diminue de 25% et la coulabilité en barbotine, exprimée en terme de temps d'écoulement de la barbotine, est divisée par presque 3.

### 1.2 Broyages en batch d'alumines calcinées différentes

Deux alumines calcinées à partir d'hydrargillite Bayer, référencées respectivement AC34 et AC44 par ALUMINUM PECHINEY font l'objet des mesures de cet exemple. L'AC34 comporte 99,6 et l'AC44 comporte 99,5 % d'alumine. Toutes deux comportent 100 ppm de silice, 160 ppm de chaux, 120ppm de sesquioxyde de fer. Elles ne diffèrent l'une de l'autre essentiellement que par la teneur en soude (2500 ppm pour l'AC34 et 4000 ppm pour l'AC44) et par leur granulométrie (le D50 des particules d'AC44 avant broyage est voisin de 45 µ).

Ces alumines calcinées ont été broyées dans le broyeur batch de l'exemple précédent pendant différentes durées, de façon à obtenir des diamètres moyens de 6 µ, 5µ et 4µ. Elles ont été broyées d'une part sans additif, d'autre part avec 0,05% d'oxyranyl-alkyl-silane C₉H₂₀O₅Si.

Les conditions de broyage en batch sont identiques à celles décrites dans l'exemple 1.

| D50 après broyage | 4*µ* | | 5*µ* | | 6*µ* | |
|---|---|---|---|---|---|---|
| PRISE D'EAU en ml/100g | sans additif | 0,05% silane | sans additif | 0,05% silane | sans additif | 0,05% silane |
| Na2O: 2500 ppm | **20** | **15** | **20** | **17** | **22** | **17** |
| Na2O: 4000 ppm | **16** | **15** | **17** | **15** | **19** | **16** |
| COULABILITE en barbotine (s) | | | | | | |
| Na2O: 2500 ppm | **28** | **10** | **34** | **14** | **48** | **14** |
| Na2O: 4000 ppm | **32** | **12** | **33** | **13** | **40** | **18** |

Cet essai confirme que, quelle que soit l'alumine calcinée employée et quelle que soit la durée du broyage, le silane organofonctionnel utilisé comme additif améliore sensiblement les propriétés recherchées. Ainsi, la coulabilité en barbotine - exprimée en durée - est supérieure à 28 secondes, en tout cas toujours supérieure à 25 secondes lorsque l'alumine calcinée n'est pas additivée. Elle est inférieure à 18 secondes, en tout cas toujours inférieure à 25 secondes lorsqu'elle est additivée.

Lorsque la teneur en soude est élevée (4000 ppm), l'effet de l'additif se fait surtout sentir sur l'alumine calcinée ayant subi le broyage le moins poussé.

### Exemple 2: Broyage en continu d'une alumine calcinée

Le broyage en continu est un procédé moins coûteux que le broyage batch, tant en terme d'énergie consommée que de coût de main d'oeuvre. Ceci permet de proposer des alumines calcinées broyées en grandes quantités avec un moindre coût. On utilise un broyeur à boulets équipé d'un sélecteur en sortie: lorsque la granulométrie du produit est supérieure au diamètre de coupure du sélecteur, il est réintroduit à l'entrée du broyeur pour subir un nouveau passage. Dans cet exemple, on broie en continu une alumine calcinée AC34 (référence ALUMINUM PECHINEY décrite dans l'exemple 1) dans le but d'obtenir une alumine calcinée broyée AC34B6 dont les particules présentent un diamètre moyen de 6 µ.

Le broyeur de cet exemple fonctionne avec un débit de production de 5 tonnes/heure. Il a un diamètre interne de 2,10 m et une longueur de 8 m. Le revêtement interne est en alumine ainsi que la charge broyante (20 tonnes de boulets de diamètre 30mm. La vitesse de rotation est égale à 22 tours/mn. Le sélecteur est un VENTOPLEX ALPINE (marque déposée).

L'additif - oxyranyl-alkyl--silane C₉H₂₀O₅Si - a été introduit au niveau de l'alimentation du broyeur avec un débit de 500g à l'heure, correspondant à une teneur d'additif de 0,05% pondéral. Les propriétés mesurées sur l'alumine calcinée ainsi broyée confirment l'intérêt présenté par cet additif. Ainsi, la coulabilité en barbotine, exprimée en terme de temps d'écoulement mis pour vider un conteneur de 150 centimètres cubes, est égale à 33 secondes alors que celle-ci était égale à 70 secondes pour la même alumine calcinée broyée sans additif.

### Exemple 3: Mélange après broyage

Une masse de 30 grammes de l'additif (oxyranyl-alkyl-silane) a été ajoutée à 60 kg d'alumine calcinée broyée AC34B6 par pulvérisation à l'aide d'un atomiseur. L'additif et l'alumine ont été mélangés au sein d'un mélangeur batch pendant une heure. Le mélangeur utilisé, un TURBULA en V de marque MORITZ, a une contenance de 100 litres. On le fait tourner avec une vitesse de rotation de 600 tours/heure.

Le temps d'écoulement de barbotine du mélange ainsi obtenu, correspondant au temps mis pour vider un conteneur de 150 centimètres cubes, est égal à 35 secondes alors que celui-ci était égal à 70 secondes pour la même alumine calcinée broyée non mélangée avec du silane.

### Exemple 4: Caractérisation de l'alumine additivée

On combine la chromatographie en phase gazeuse et la spectrométrie de masse.

Avec la chromatographie en phase gazeuse, il y a séparation des composés en fonction de leur température d'ébullition et de leur affinité pour une phase solide.

Après séparation en chromatographie en phase gazeuse, les composés sont fragmentés par impact électronique. Chaque fragment est ensuite séparé dans un champ électromagnétique et identifié, ce qui permet d'en déduire la structure de la molécule initiale.

Extraction des composés organiques :
On place 15 g de poudre d'alumine dans une cartouche en cellulose ; l'extraction est réalisée à l'aide d'un Soxtec, permettant l'immersion de l'échantillon dans 80 ml de méthanol à ébullition (30 minutes) puis, par remontée de la cartouche d'extraction, le rinçage de l'échantillon par le solvant à reflux (45 minutes).

L'extrait est concentré à 1,5 ml sous pression réduite puis injecté en chromatographie en phase gazeuse couplée à un spectromètre de masse.

On obtient des chromatogrammes : pics d'extraction (isomères) du silane en fonction du temps de rétention. Pour l'oxyranyl-alkyl--silane C₉H₂₀O₅Si, ces pics correspondent aux temps de rétention suivants: 21.92 min, 22.17 min et 22.36 min

Pour ces temps de rétention, on détermine le spectre de masse du silane (masse / charge). Ce dernier présente des pics caractéristiques à 91, 109, 121, 139, 147, 205 et 237 UMA (unités de masse atomique).

Connaissant le spectre de masse du silane, on peut comparer les courants ioniques totaux et spécifiques au silane pour l'alumine avec et sans silane.

Pour l'alumine additivée, on constate entre 20 et 22 minutes de rétention une élévation de la ligne de base sur tous les fragments caractéristiques du silane.

### AVANTAGES

▪ Amélioration des propriétés d'emploi de l'alumine;
▪ Chimie des alumines calcinées non perturbée en raison des très faibles quantités du minéralisant et de l'additif;
▪ Pas de génération de poussières au cours du broyage;
▪ Pas de colmatage de la poudre sur les parois du broyeur

## Revendications

1. Alumine calcinée broyée additivée destinée à entrer dans la composition d'un précurseur pour matériau réfractaire **caractérisée en ce qu'**elle comporte un oxyranyl-alkyl-silane, de formule chimique C₉H₂₀O₅Si.

2. Alumine calcinée broyée additivée selon la revendication 1 **caractérisée en ce qu'**elle se présente sous forme de particules recouvertes d'une couche nanométrique dudit oxyranyl-alkyl-silane.

3. Alumine calcinée broyée additivée selon la revendication 1 ou 2 dans laquelle ledit oxyranyl-alkyl-silane est présent dans une proportion pondérale comprise entre 0,01% et 1%.

4. Alumine calcinée broyée additivée selon la revendication 1, dans laquelle ledit oxyranyl-alkyl-silane est présent dans une proportion pondérale comprise entre 0,01% et 0,1%.

5. Alumine calcinée broyée additivée selon l'une quelconque des revendications 1 à 4, présentant une coulabilité en barbotine qui, exprimée en durée d'évacuation d'un conteneur cylindrique de 150 centimètres cubes, est au moins deux fois plus faible que celle de l'alumine calcinée broyée non additivée.

6. Procédé d'obtention d'une alumine calcinée broyée destinée à entrer dans la composition d'un précurseur pour matériau réfractaire dans lequel on calcine un hydrate d'alumine à une température comprise entre 800°C et 1300°C pendant une durée d'une demi-heure à 4 heures, **caractérisé en ce que** l'alumine calcinée obtenue est ensuite broyée en présence d'un oxyranyl-alkyl-silane, de formule chimique C₉H₂₀O₅Si.

7. Procédé selon la revendication 6 dans lequel on calcine ladite alumine en présence d'un composé halogéné faisant office de minéralisant.

8. Procédé selon la revendication 7 dans lequel le composé halogéné faisant office de minéralisant est un composé fluoré choisi dans le groupe constitué du fluor, de l'acide fluorhydrique, du trifluorure d'aluminium, et des fluorures alcalins.

9. Procédé selon la revendication 8 dans lequel l'introduction du minéralisant génère une atmosphère faiblement fluorée dans le four, la proportion en volume de gaz halogéné étant comprise entre 0,001% et 0,2%.

10. Procédé d'obtention d'un précurseur pour matériau réfractaire **caractérisé en ce que** l'on utilise l'alumine calcinée broyée additivée selon l'une quelconque des revendications 1 à 5 et 9.

## Patentansprüche

1. Additiviertes gemahlenes kalziniertes Aluminiumoxid, das dazu bestimmt ist, Bestandteil eines Präkursors für feuerfestes Material zu sein, **dadurch gekennzeichnet, dass** es ein Oxiranyl-Alkylsilan mit der chemischen Formel C₉H₂₀O₅Si umfasst.

2. Additiviertes gemahlenes kalziniertes Aluminiumoxid nach Anspruch 1, **dadurch gekennzeichnet, dass** es in Form von Partikeln, die mit einer nanometrischen Schicht aus dem Oxiranyl-Alkylsilan überzogen sind, vorliegt.

3. Additiviertes gemahlenes kalziniertes Aluminiumoxid nach Anspruch 1 oder 2, wobei das Oxiranyl-Alkylsilan in einem Gewichtsanteil zwischen 0,01 % und 1 % vorhanden ist.

4. Additiviertes gemahlenes kalziniertes Aluminiumoxid nach Anspruch 1, wobei das Oxiranyl-Alkylsilan in einem Gewichtsanteil zwischen 0,01 % und 0,1 % vorhanden ist.

5. Additiviertes gemahlenes kalziniertes Aluminiumoxid nach einem der Ansprüche 1 bis 4, das eine Schlickervergießbarkeit aufweist, die, ausgedrückt in Dauer zum Entleeren eines zylindrischen Behälters mit 150 Kubikzentimetern, wenigstens zweimal geringer als die des nicht additivierten gemahlenen kalzinierten Aluminiumoxids ist.

6. Verfahren zum Erhalt eines gemahlenen kalzinierten Aluminiumoxids, das dazu bestimmt ist, Bestandteil eines Präkursors für feuerfestes Material zu sein, wobei ein Aluminiumoxidhydrat bei einer Temperatur zwischen 800 °C und 1300 °C für eine Dauer von einer halben Stunde bis 4 Stunden kalziniert wird, **dadurch gekennzeichnet, dass** das erhaltene kalzinierte Aluminiumoxid anschließend in Gegenwart eines Oxiranyl-Alkylsilan mit der chemischen Formel C₉H₂₀O₅Si gemahlen wird.

7. Verfahren nach Anspruch 6, wobei das Aluminiumoxid in Gegenwart einer Halogenverbindung, die als Mineralisierer dient, kalziniert wird.

8. Verfahren nach Anspruch 7, wobei die als Mineralisierer dienende Halogenverbindung eine Fluorverbindung, ausgewählt aus der Gruppe bestehend aus Fluor, Flusssäure, Aluminiumtrifluorid und Alkalifluoriden ist.

9. Verfahren nach Anspruch 8, wobei das Einbringen des Mineralisierers eine schwach fluorierte Atmosphäre in dem Ofen erzeugt, wobei der Volumenanteil an halogeniertem Gas zwischen 0,001 % und 0,2 % beträgt.

10. Verfahren zum Erhalt eines Präkursors für feuerfestes Material, **dadurch gekennzeichnet, dass** das additivierte gemahlene kalzinierte Aluminiumoxid nach einem der Ansprüche 1 bis 5 und 9 verwendet wird.

## Claims

1. Ground calcined alumina with additive for input in the composition of a precursor for a refractory material, **characterised in that** it comprises an oxyranyl-alkyl-silane, with chemical formula C₉H₂₀O₅Si.

2. Ground calcined alumina with additive according to claim 1, **characterised in that** it is in the form of particles covered by a nanometric layer of the said oxyranyl-alkyl-silane.

3. Ground calcined alumina with additive according to claim 1 or 2, in which the said oxyranyl-alkyl-silane is present in a proportion by weight between 0.01% and 1%.

4. Ground calcined alumina with additive according to claim 1, in which the said oxyranyl-alkyl-silane is present in a proportion by weight between 0.01% and 0.1%.

5. Ground calcined alumina with additive according to any claims 1 to 4, with a slurry flowability, expressed as the time taken to empty a cylindrical container containing 150 cubic centimetres which is at least twice lower than the value of ground calcined alumina without additive.

6. Method for obtaining a ground calcined alumina for input in the composition of a precursor for a refractory material in which an alumina hydrate is calcined at a temperature of between 800[deg.] C. and 1300[deg.] C. for a period of half an hour to 4 hours, **characterised in that** the obtained calcined alumina is then ground in the presence of an oxyranyl-alkyl-silane, with chemical formula C₉H₂₀O₅Si.

7. Method according to claim 6, in which the said alumina is calcined in the presence of a halogenated compound acting as a mineralising agent.

8. Method according to claim 7, in which the halogenated compound acting as a mineralising agent is a fluorinated compound chosen from among the group constituted of the fluorine, hydrofluoric acid, aluminium trifluoride and alkaline fluorides.

9. Method according to claim 8, in which the addition of the mineralising agent generates a slightly fluorinated atmosphere in the furnace, the proportion by volume of halogenated gas being between 0.001% and 0.2%.

10. Method for obtaining a precursor for a refractory material, **characterised in that** the ground calcined alumina with additive according to any of claims 1 to 5 and 9 is used.
